# EUROPEAN PATENT APPLICATION

(11) **EP 4 123 366 A1**
(43) Date of publication of application: **25.01.2023**
(21) Application number: 21771998.8
(22) Date of filing: 02.03.2021
(51) Int. Cl.: G03B 5/00, G03B 17/02, H04N 5/225, H04N 5/232

(54) **CAMERA ACTUATOR AND CAMERA DEVICE COMPRISING SAME**

(30) Priority: 18.03.2020 KR 20200033330
(71) Applicant: LG Innotek Co., Ltd., Seoul 07796 (KR)
(72) Inventor: BANG, Jung Hwan, Seoul 07796 (KR); OH, Jun Seok, Seoul 07796 (KR); LEE, Dong Yeon, Seoul 07796 (KR)
(74) Representative: M. Zardi & Co S.A.
(86) International application number: PCT/KR2021/002552
(87) International publication number: WO 2021/187773

(57) **Abstract**

An embodiment of the present invention discloses a camera actuator comprising: a housing; a mover disposed in the housing and including an optical member, and a drive disposed in the housing so as to drive the mover, wherein: the drive comprises a drive magnet, a drive coil placed opposite to the drive magnet, a sensor unit for sensing the position of the mover, and a substrate unit connected to the sensor unit, and a second sensor unit opposite to and connected in series to the first sensor unit.

## Description

### [Technical Field]

The present invention relates to a camera actuator and a camera device including the same.

### [Background Art]

Cameras are devices that capture a picture or moving image of a subject, and are mounted on portable devices, drones, vehicles, or the like. A camera device has, in order to improve image quality, an image stabilization (IS) function of correcting or preventing shaking of an image caused by a motion of a user, an auto focusing (AF) function of automatically adjusting a distance between an image sensor and a lens to adjust a focal length of the lens, and a zooming function of increasing or decreasing the magnification of a distant subject through a zoom lens.

Meanwhile, in the image sensor, a resolution becomes larger as the number of pixels becomes higher, and thus the size of the pixels is reduced. As the pixels become smaller, the quantity of light received for the same time is reduced. Thus, as a camera has the higher number of pixels, the shaking of an image caused by shaking of hands that occurs since a shutter speed is reduced in a dark environment may be more severe. An optical image stabilizer (OIS) technology of correcting motion by changing a path of light is present as a representative IS technology.

According to a general OIS technology, the movement of the camera may be detected through a gyro sensor or the like, and on the basis of the detected movement, the lens may be tilted or moved or the camera module including the lens and the image sensor may be tilted or moved. When the lens or the camera module including the lens and the image sensor is tilted or moved for the OIS, a space for tilting or moving the lens or the camera module needs to be additionally secured around the lens or the camera module.

Meanwhile, an actuator for the OIS may be disposed near the lens. In this case, the actuator for the OIS may include an actuator responsible for tilting in an X axis and an actuator responsible for tilting in a Y axis, wherein the X axis and the Y axis are perpendicular to an optical axis Z.

However, according to the needs of ultra-slim and ultra-small camera devices, a space for arranging the actuator for the OIS may be greatly limited, and it may be difficult for the lens or the camera module itself including the lens and the image sensor to ensure a sufficient space for being tilted or moved for the OIS. Further, it is preferable that, as the camera has the larger number of pixels, the size of the lens becomes greater to increase the quantity of received light. In this case, there is a limit to increase the size of the lens due to the space occupied by the actuator for the OIS.

Further, when all the zooming function, the AF function, and the OIS function are included in the camera device, a magnet for the OIS function and a magnet for the AF function or the zooming function are arranged close to each other to cause magnetic field interference.

Further, there is a problem that noise occurs due to a position sensor such as a Hall sensor for location detection.

### [Disclosure]

### [Technical Problem]

The present invention is directed to providing a camera actuator that may applied to an ultra-thin, ultra-small, and high-resolution camera.

The present invention is also directed to providing a camera actuator that minimizes the number of required input pins.

The present invention is also directed to providing a camera actuator having minimal exposure to offset noise.

### [Technical Solution]

One aspect of the present invention provides a camera actuator including a housing, a mover that is disposed in the housing and includes an optical member, and a driving part that is disposed in the housing and drives the mover, wherein the driving part includes a driving magnet, a driving coil disposed to face the driving magnet, a sensor unit that detects a location of the mover, and a board part connected to the sensor unit, and the sensor unit includes a first sensor unit and a second sensor unit that faces and is connected in series to the first sensor unit.

The board part may include a first board region, a second board region disposed to be spaced apart from and correspond to the first board region, and a third board region disposed between the first board region and the second board region, the first sensor unit may be disposed in the first board region, and the second sensor unit may be disposed in the second board region.

The camera actuator may further include a controller for outputting a driving signal for moving the optical member to a target location on the basis of location information of the optical member detected by the first sensor unit and the second sensor unit.

The controller may be disposed in any one of the first board region and the second board region.

The first sensor unit may include a (1-1)^{th} detection signal terminal having a positive (+) polarity and a (2-1)^{th} detection signal output terminal having a negative (-) polarity.

The second sensor unit may include a (1-2)^{th} detection signal output terminal having a positive (+) polarity and a (2-2)^{th} detection signal output terminal having a negative (-) polarity.

The board part may include a first path connecting the (1-1)^{th} detection signal output terminal and the controller, a second path connecting the (2-1)^{th} detection signal output terminal and the (1-2)^{th} detection signal output terminal, and a third path connecting the (2-2)^{th} detection signal output terminal and the controller.

The second path may pass through the first board region, the second board region, and the third board region.

Lengths of the first path and the third path may be different from each other.

The housing may include a first housing side part, and a second housing side part disposed to correspond to the first housing side part.

The first housing side part may include a first housing hole, the second housing side part may include a second housing hole, the driving magnet may include a first magnet and a second magnet disposed to correspond to the first magnet, the driving coil may include a first coil and a second coil disposed to correspond to the first coil, any one of the first coil and the first magnet may be disposed in the first housing hole, and any one of the second coil and the second magnet may be disposed in the second housing hole.

The first board region may be in contact with the first housing side part, and the second board region may be in contact with the second housing side part.

### [Advantageous Effects]

According to an embodiment of the present invention, a camera actuator that may applied to an ultra-thin, ultra-small, and high-resolution camera can be provided. In particular, an optical image stabilizer (OIS) actuator can be efficiently disposed without increasing the entire size of a camera device.

According to an embodiment of the present invention, tilting in an X-axis direction and tilting in a Y-axis direction do not generate magnetic field interference therebetween, tilting in the X-axis direction and tilting in the Y-axis direction can be implemented with a stable structure, magnetic field interference with an auto focusing (AF) or zooming actuator is not caused, and thus an accurate OIS function can be implemented.

According to an embodiment of the present invention, as the size limit of a lens is resolved, a sufficient quantity of light can be secured, and OIS can be implemented with low power consumption.

Further, according to an embodiment, a camera actuator that minimizes the number of required input pins can be implemented.

Further, a camera actuator that minimizes exposure to offset noise can be implemented.

### [Description of Drawings]

FIG. 1 is a perspective view of a camera module according to an embodiment.
FIG. 2 is an exploded perspective view of the camera module according to the embodiment.
FIG. 3 is a cross-sectional view along line AA' of FIG. 1.
FIG. 4 is an exploded perspective view of a first camera actuator according to an embodiment.
FIG. 5 is a perspective view of the first camera actuator according to the embodiment from which a shield can and a board are removed.
FIG. 6 is a cross-sectional view along line BB' of FIG. 5.
FIG. 7 is a cross-sectional view along line CC' of FIG. 5.
FIG. 8 is a perspective view of a second camera actuator according to an embodiment.
FIG. 9 is an exploded perspective view of the second camera actuator according to the embodiment.
FIG. 10 is a cross-sectional view along line DD' of FIG. 8.
FIG. 11 is a cross-sectional view along line EE' of FIG. 8.
FIG. 12 is a block diagram illustrating a configuration of a camera module according to an embodiment of the present invention.
FIG. 13 is a block diagram illustrating a detailed configuration of a location sensor part of FIG. 12.
FIGS. 14 and 15 are views for describing a connection relationship of a sensor unit of FIG. 13.
FIG. 16 is a view for describing the connection relationship of the sensor unit according to an embodiment of the present invention.
FIG. 17 is a view for describing a connection relationship of a sensor unit according to another embodiment of the present invention.
FIG. 18 is a perspective view of a holder according to an embodiment.
FIG. 19 is a bottom view of the holder according to the embodiment.
FIG. 20 is a perspective view of a first camera actuator according to an embodiment.
FIG. 21 is a cross-sectional view along line FF' of FIG. 20.
FIG. 22 is a cross-sectional view along line GG' of FIG. 20.
FIG. 23 is a view when viewed from another direction in FIG. 22.
FIG. 24 is a view of a first board part according to an embodiment.
FIG. 25 is an enlarged view of part K1 in FIG. 24.
FIG. 26 is an enlarged view of part K2 in FIG. 24.
FIGS. 27 and 28 are views for describing a structure of a Hall sensor unit according to an embodiment.
FIG. 29 is a perspective view of a mobile terminal to which the camera module according to the embodiment is applied.
FIG. 30 is a perspective view of a vehicle to which the camera module according to the embodiment is applied.

### [Modes of the Invention]

The present invention may be modified in various changes and may have various embodiments and is thus intended to describe specific embodiments with the accompanying drawings. However, it should be understood that the present invention is not limited to the specific embodiments and includes all changes, equivalents, and substitutes included in the spirit and scope of the present invention.

Terms including an ordinal number such as second and first may be used to describe various components, but the components not limited by the terms. The terms are used only for the purpose of distinguishing one component from another component. For example, without departing from the scope of the present invention, a second component may be referred to as a first component, and similarly, the first component may be referred to as the second component. Term "and/or" includes any or a combination of a plurality of related listed items.

It should be understood that, when it is referenced that a first component is "connected" or "coupled" to a second component, the first component may be directly connected or coupled to the second component or a third component may be present between the first component and the second component. On the other hand, it should be understood that, when a first component is "directly connected" or "directly coupled" to a second component, a third component is not present therebetween.

Terms used in the present application are used only to describe the specific embodiments and are not intended to limit the present invention. Singular expressions include plural expressions unless clearly otherwise indicated in the context. It should be understood in the present application that terms such as "include" or "have" are intended to indicate that there are features, numbers, steps, operations, components, parts, or combinations thereof that are described in the specification and do not exclude in advance the possibility of the presence or addition of one or more other features, numbers, steps, operations, components, parts, or combinations thereof.

Unless otherwise defined, all terms used herein including technical or scientific terms have the same meanings as those commonly understood by those skilled in the art to which the present invention belongs. Terms defined in commonly used dictionaries should be interpreted as having the same meanings in the context of the related art and may not be interpreted with ideal or excessively formal meanings, unless explicitly defined in the present application.

Hereinafter, embodiments will be described in detail with reference to the accompanying drawings, the same or corresponding components are designated by the same reference numerals regardless of the reference numerals, and the duplicated description thereof will be omitted.

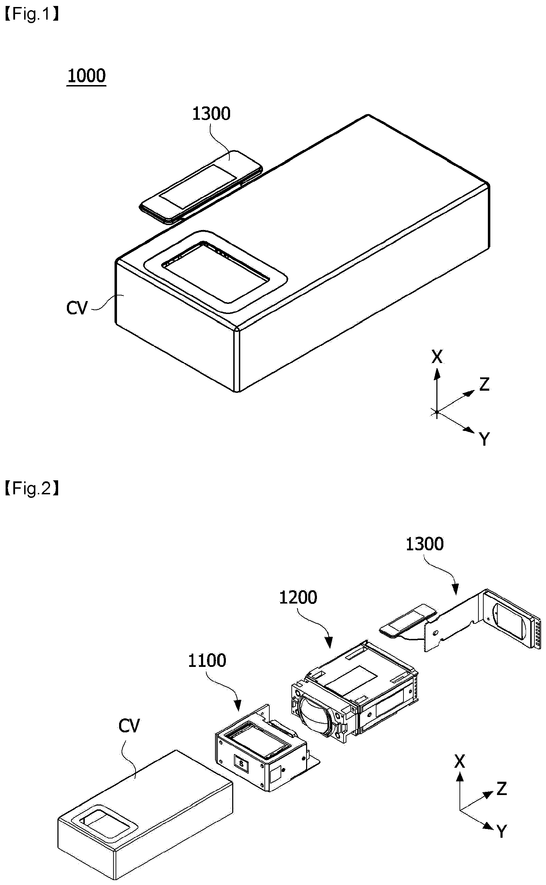

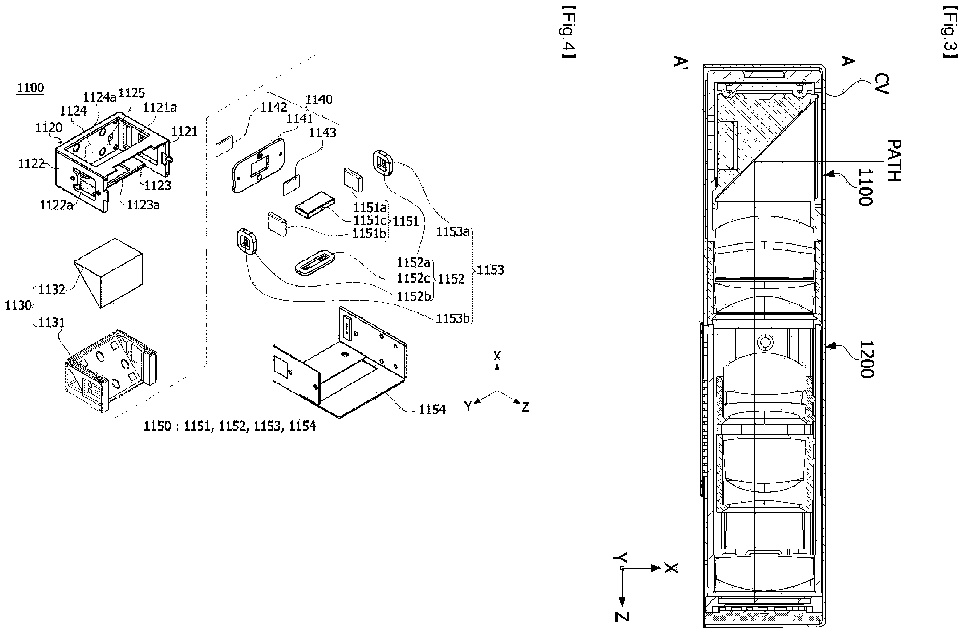

FIG. 1 is a perspective view of a camera module according to an embodiment, FIG. 2 is an exploded perspective view of the camera module according to an embodiment, and FIG. 3 is a cross-sectional view along line AA' of FIG. 1.

Referring to FIGS. 1 and 2, a camera module 1000 according to an embodiment may include a cover CV, a first camera actuator 1100, a second camera actuator 1200, and a circuit board 1300. Here, the first camera actuator 1100 may be used interchangeably with a first actuator, and the second camera actuator 1200 may be used interchangeably with a second actuator.

The cover CV may cover the first camera actuator 1100 and the second camera actuator 1200. A coupling force between the first camera actuator 1100 and the second camera actuator 1200 can be improved by the cover CV.

Furthermore, the cover CV may be made of a material that blocks electromagnetic waves. Accordingly, the first camera actuator 1100 and the second camera actuator 1200 inside the cover CV can be easily protected.

Further, the first camera actuator 1100 may be an optical image stabilizer (OIS) actuator.

The first camera actuator 1100 may include a fixed focal length lens disposed in a predetermined barrel (not illustrated). The fixed focal length lens may also be referred to as a "single focal length lens" or a "single lens."

The first camera actuator 1100 may change an optical path. In an embodiment, the first camera actuator 1100 may change the optical path vertically through an optical member (for example, a mirror) therein. Due to this configuration, even when the thickness of a mobile terminal is reduced, a lens configuration larger than the thickness of the mobile terminal is disposed inside the mobile terminal through the change in the optical path, and thus a magnification function, an auto focusing (AF) function, and an OIS function can be performed.

The second camera actuator 1200 may be disposed at a rear end of the first camera actuator 1100. The second camera actuator 1200 may be coupled to the first camera actuator 1100. Further, the coupling therebetween may be performed in various manners.

Further, the second camera actuator 1200 may be a zooming actuator or an AF actuator. For example, the second camera actuator 1200 may support one or more lenses and move the lenses in response to a predetermined control signal of a controller to perform the AF function or a zooming function.

The circuit board 1300 may be disposed at a rear end of the second camera actuator 1200. The circuit board 1300 may be electrically connected to the second camera actuator 1200 and the first camera actuator 1100. Further, the circuit board 1300 may be provided as a plurality of circuit boards 1300.

The camera module according to the embodiment may be configured as one or more camera modules. For example, the plurality of camera modules may include a first camera device and a second camera device.

Further, the first camera module may include one or more actuators. For example, the first camera module may include the first camera actuator 1100 and the second camera actuator 1200.

Further, the second camera module may include an actuator (not illustrated) that is disposed in a predetermined housing (not illustrated) and may drive a lens part. The actuator may be a voice coil motor, a micro actuator, a silicon actuator, or the like, and may be applied in various methods such as an electrostatic method, a thermal method, a bimorph method, and an electrostatic force method, but the present invention is not limited thereto. Further, in the present specification, the camera actuator may be referred to as an actuator or the like. Further, the camera module including the plurality of camera modules may be mounted in various electronic devices such as a mobile terminal.

Referring to FIG. 3, the camera module according the embodiment may include the first camera actuator 1100 for performing the OIS function and the second camera actuator 1200 for performing the zooming function and the AF function.

Light may enter the inside of the camera module through an opening region located on an upper surface of the first camera actuator 1100. That is, the light may enter the inside of the first camera actuator 1100 in an optical axis direction (for example, an X-axis direction), and the optical path may be changed in a vertical direction (for example, a Z-axis direction) through the optical member. Further, the light may pass through the second camera actuator 1200 and be incident on an image sensor IS located at one end of the second camera actuator 1200 (PATH).

In the present specification, a bottom surface is one side in a first direction. Further, the first direction is the X-axis direction on the drawing and may be used interchangeably with a second axis direction. A second direction is a Y-axis direction on the drawing and may be used interchangeably with a first axis direction. The second direction is a direction perpendicular to the first direction. Further, a third direction is the Z-axis direction on the drawing and may be used interchangeably with a third axis direction. The third direction is a direction perpendicular to both the first direction and the second direction. Here, the third direction (the Z-axis direction) may correspond to a direction of an optical axis, the first direction (the X-axis direction) and the second direction (the Y-axis direction) are directions perpendicular to the optical axis, and the third direction may be tilted by the second camera actuator. A detailed description thereof will be made below.

Further, in the following description of the second camera actuator 1200, the optical axis direction is the third direction (the Z-axis direction), and the following direction will be made with reference to this.

Further, according to this configuration, the camera module according to the embodiment may change the optical path to overcome spatial limitations of the first camera actuator and the second camera actuator. That is, the camera module according to an embodiment may extend the optical path while minimizing the thickness of the camera module due to the change of the optical path. Furthermore, it should be understood that the second camera actuator may control a focus or the like in the extended optical path to provide a high range of magnification.

Further, the camera module according to the embodiment may implement the OIS function through control of the optical path through the first camera actuator, thereby minimizing occurrence of a decenter phenomenon or a tilting phenomenon, and achieving the best optical properties.

Furthermore, the second camera actuator 1200 may include an optical system and a lens driving part. For example, at least one of a first lens assembly, a second lens assembly, a third lens assembly, and a guide pin may be arranged in the second camera actuator 1200.

Further, the second camera actuator 1200 may be provided with a coil and a magnet to perform a high-magnification zooming function.

For example, the first lens assembly and the second lens assembly may be moving lenses that are moved through the coil, the magnet, and the guide pin, and the third lens assembly may be a fixed lens, but the present invention is not limited thereto. For example, the third lens assembly may function as a focator that forms an image at a specific location, and the first lens assembly may function as a variator that re-images, at another location, the image formed by the third lens assembly that is the focator. Meanwhile, in the first lens assembly, a distance to a subject or an image distance is greatly changed, and thus a magnification change may be large. The first lens assembly that is the variator may perform an important role in changing a focal length or a magnification of the optical system. Meanwhile, an image point formed by the first lens assembly that is the variator may be slightly different according to a location. Accordingly, the second lens assembly may perform a location compensation function for the image formed by the variator. For example, the second lens assembly may function as a compensator that accurately images, at an actual location of an image sensor, an image point formed by the first lens assembly that is the variator. For example, the first lens assembly and the second lens assembly may be driven using an electromagnetic force due to the interaction between the coil and the magnet. The above description may be applied to the lens assembly which will be described below.

Meanwhile, when an OIS actuator and an AF or zooming actuator are arranged according to the embodiment of the present invention, magnetic field interference with a magnet for AF or zooming can be prevented during an OIS operation. Since a first driving magnet of the first camera actuator 1100 is disposed separately from the second camera actuator 1200, magnetic field interference between the first camera actuator 1100 and the second camera actuator 1200 can be prevented. In the present specification, the OIS may be used interchangeably with terms such as hand shaking correction, optical image stabilization, optical image correction, and shaking correction.

FIG. 4 is an exploded perspective view of the second camera actuator according to an embodiment.

Referring to 4, the second camera actuator 1100 according to the embodiment includes a first shield can (not illustrated), a first housing 1120, a mover 1130, a rotation part 1140, and a first driving part 1150.

The mover 1130 may include a holder 1131 and an optical member 1132 seated on the holder 1131. Further, the rotation part 1140 includes a rotation plate 1141, a first magnetic body 1142 having a coupling force with the rotation plate 1141, and a second magnetic body 1143 located inside the rotation plate 1141. Further, the first driving part 1150 may include a driving magnet 1151, a driving coil 1152, a Hall sensor unit 1153, and a first board part 1154.

The first shield can (not illustrated) may be located on an outermost side of the second camera actuator 1100 and located to surround the rotation part 1140 and the first driving part 1150 which will described below.

The first shield can (not illustrated) may block or reduce electromagnetic waves generated from the outside. Accordingly, occurrence of malfunction of the rotation part 1140 or the first driving part 1150 can be reduced.

The first housing 1120 may be located inside the first shield can (not illustrated). Further, the first housing 1120 may be located inside the first board part 1154, which will be described below. The first housing 1120 may be fitted into or matched with and fastened to the first shield can (not illustrated).

The first housing 1120 may include a plurality of housing side parts. The first housing 1120 may include a first housing side part 1121, a second housing side part 1122, a third housing side part 1123, and a fourth housing side part 1124.

The first housing side part 1121 and the second housing side part 1122 may be arranged to face each other. Further, the third housing side part 1123 and the fourth housing side part 1124 may be arranged between the first housing side part 1121 and the second housing side part 1122.

The third housing side part 1123 may be in contact with the first housing side part 1121, the second housing side part 1122, and the fourth housing side part 1124. Further, the third housing side part 1123 may include a bottom surface as a lower side of the first housing 1120.

Further, the first housing side part 1121 may include a first housing hole 1121a. A first coil 1152a, which will be described below, may be located in the first housing hole 1121a.

Further, the second housing side part 1122 may include a second housing hole 1122a. Further, a second coil 1152b, which will be described below, may be located in the second housing hole 1122a.

The first coil 1152a and the second coil 1152b may be coupled to the first board part 1154. In an embodiment, the first coil 1152a and the second coil 1152b may be electrically connected to the first board part 1154 so that a current may flow therethrough. This current is a component of an electromagnetic force by which the second camera actuator may be tilted with respect to the X axis.

Further, the third housing side part 1123 may include a third housing hole 1123a. A third coil 1152c, which will be described below, may be located in the third housing hole 1123a. The third coil 1152c may be coupled to the first board part 1154. Further, the third coil 1152c may be electrically connected to the first board part 1154 so that a current may flow therethrough. This current is a component of an electromagnetic force by which the second camera actuator may be tilted with respect to the Y axis.

The fourth housing side part 1124 may include a first housing groove 1124a. The first magnetic body 1142, which will be described below, may be disposed in a region facing the first housing groove 1124a. Accordingly, the first housing 1120 may be coupled to the rotation plate 1141 by a magnetic force or the like.

Further, the first housing groove 1124a according to the embodiment may be located on an inner surface or outer surface of the fourth housing side part 1124. Accordingly, the first magnetic body 1142 may be also disposed to correspond to a location of the first housing groove 1124a.

Further, the first housing 1120 may include an accommodation part 1125 defined by the first to fourth housing side parts 1121 to 1124. The mover 1130 may be located in the accommodation part 1125.

The mover 1130 includes the holder 1131 and the optical member 1132 seated on the holder 1131.

The holder 1131 may be seated on the accommodation part 1125 of the first housing 1120. The holder 1131 may include a first outer prism surface to a fourth outer prism surface respectively corresponding to the first housing side part 1121, the second housing side part 1122, the third housing side part 1123, and the fourth housing side part 1124.

A seating groove on which the second magnetic body 1143 may be seated may be disposed in the fourth outer prism surface facing the fourth housing side part 1124.

The optical member 1132 may be seated on the holder 1131. To this end, the holder 1131 may have a seating surface, and the seating surface may be formed by an accommodation groove. The optical member 1132 may include a reflective part disposed therein. However, the present invention is not limited thereto. Further, the optical member 1132 may reflect, into the camera module, light reflected from the outside (e.g., an object). In other words, the optical member 1132 may change a path of the reflected light so as to overcome spatial limitation of the first camera actuator and the second camera actuator. Accordingly, it should be understood that the camera module can expand the optical path while minimizing a thickness thereof, and thus can also provide a high range of magnifications.

The rotation part 1140 includes the rotation plate 1141, the first magnetic body 1142 having a coupling force with the rotation plate 1141, and the second magnetic body 1143 located inside the rotation plate 1141.

The rotation plate 1141 may be coupled to the mover 1130 and the first housing 1120, which have been described above. For example, a location of the rotation plate 1141 may be maintained between the mover 1130 and the first housing 1120 by a magnetic force (for example, an attractive force and a repulsive force) between the first magnetic body 1142 and the second magnetic body 1143. The rotation plate 1141 may include an additional magnetic body (not illustrated) located therein.

Further, the rotation plate 1141 may be disposed adjacent to the optical axis. Accordingly, the actuator according to the embodiment may easily change the optical path according to first and second axis tilts, which will be described below.

The rotation plate 1141 may include a first protrusion spaced apart therefrom in the first direction (the X-axis direction) and a second protrusion spaced part therefrom in a second direction (the Y-axis direction). Further, the first protrusion and the second protrusion may protrude in opposite directions from each other. A detailed description thereof will be made below.

Further, the first magnetic body 1142 may include a plurality of yokes, and the plurality of yokes may be located to face each other with respect to the rotation plate 1141. In an embodiment, the first magnetic body 1142 may include the plurality of yokes facing each other. Further, the rotation plate 1141 may be located between the plurality of yokes.

The first magnetic body 1142 may be located inside the first housing 1120 as described above. Further, as described above, the first magnetic body 1142 may be seated on the inner surface or outer surface of the fourth housing side part 1124. For example, the first magnetic body 1142 may be seated on a groove formed in the outer surface of the fourth housing side part 1124. Further, the first magnetic body 1142 may be seated on the first housing groove 1124a.

Further, the second magnetic body 1143 may be located on the mover 1130, particularly, on an outer surface of the holder 1131. Due to this configuration, the rotation plate 1141 may be easily coupled to the first housing 1120 and the mover 1130 using a coupling force due to a magnetic force between the second magnetic body 1143 and the first magnetic body 1142 therein. In the present invention, locations of the first magnetic body 1142 and the second magnetic body 1143 may be changed to each other.

The first driving part 1150 may include the driving magnet 1151, the driving coil 1152, the Hall sensor unit 1153, and the first board part 1154.

The driving magnet 1151 may include a plurality of magnets. In one embodiment, the driving magnet 1151 may include a first magnet 1151a, a second magnet 1151b, and a third magnet 1151c.

The first magnet 1151a, the second magnet 1151b, and the third magnet 1151c may be located on the outer surface of the holder 1131. Further, the first magnet 1151a and the second magnet 1151b may be located to face each other. Further, the third magnet 1151c may be located on a bottom surface among the outer surface of the holder 1131. A detailed description thereof will be made below.

The driving coil 1152 may include a plurality of coils. In an embodiment, the driving coil 1152 may include the first coil 1152a, the second coil 1152b, and the third coil 1152c.

The first coil 1152a may be located to face the first magnet 1151a. Accordingly, as described above, the first coil 1152a may be located in the first housing hole 1121a of the first housing side part 1121.

Further, the second coil 1152b may be located to face the second magnet 1151b. Accordingly, as described above, the second coil 1152b may be located in the second housing hole 1122a of the second housing side part 1122.

The first coil 1152a may be located to face the second coil 1152b. That is, the first coil 1152a may be located to be symmetrical to the second coil 1152b with respect to the first direction (the X-axis direction). This may be equally applied even to the first magnet 1151a and the second magnet 1151b. That is, the first magnet 1151a and the second magnet 1151b may be located to be symmetrical to each other with respect to the first direction (the X-axis direction). Further, the first coil 1152a, the second coil 1152b, the first magnet 1151a, and the second magnet 1151b may be arranged to at least partially overlap each other in the second direction (the Y-axis direction). Due to this configuration, the X-axis tilting may be accurately performed without inclination to one side by using the electromagnetic force between the first coil 1152a and the first magnet 1151a and the electromagnetic force between the second coil 1152b and the second magnet 1151b.

The third coil 1152c may be located to face the third magnet 1151c. Accordingly, as described above, the third coil 1152c may be located in the third housing hole 1123a of the third housing side part 1123. The third coil 1152c may generate an electromagnetic force with the third magnet 1151c, and thus Y-axis tilting of the mover 1130 and the rotation part 1140 with respect to the first housing 1120 may be performed.

Here, the X-axis tilting is tilting with respect to an X axis, and the Y-axis tilting is tilting with respect to a Y axis.

The Hall sensor unit 1153 may include a plurality of Hall sensors. The Hall sensor corresponds to a "sensor unit" which will be described below and is used interchangeably therewith. In an embodiment, the Hall sensor unit 1153 may include a first Hall sensor 1153a, a second Hall sensor 1153b, and a third Hall sensor 1153c.

The first Hall sensor 1153a may be located inside the first coil 1152a. Further, the second Hall sensor 1153b may be disposed symmetrical to the first Hall sensor 1153a with respect to the first direction (the X-axis direction) and the third direction (the Z-axis direction). Further, the second Hall sensor 1153b may be located inside the second coil 1152b.

The first Hall sensor 1153a may detect a change in a magnetic flux inside the first coil 1152a. Further, the second Hall sensor 1153b may detect a change in magnetic flux in the second coil 1152b. Accordingly, location sensing between the first and second magnets 1151a and 1151b and the first and second Hall sensors 1153a and 1153b may be performed. For example, the second camera actuator according to an embodiment can control the X-axis tilting through the location sensing using the first and second Hall sensors 1153a and 1153b.

Further, the third Hall sensor 1153c may be located inside the third coil 1152c. The third Hall sensor 1153c may detect a change in a magnetic flux inside the third coil 1152c. Accordingly, location sensing between the third magnet 1151c and the third Hall sensor 1153c may be performed. The second camera actuator according to an embodiment may control the Y-axis tilting through the location sensing.

The first board part 1154 may be located below the first driving part 1150. The first board part 154 may be electrically connected to the driving coil 1152 and the Hall sensor unit 1153. For example, the first board part 1154 may be coupled to the driving coil 1152 and the Hall sensor unit 1153 through a surface mounting technology (SMT). However, the present invention is not limited to this method.

The first board part 1154 may be located between the first shield can (not illustrated) and the first housing 1120 and coupled to the first shield can (not illustrated) and the first housing 1120. The coupling method may be various as described above. Further, through the coupling, the driving coil 1152 and the Hall sensor unit 1153 may be located inside an outer surface of the first housing 1120.

The first board part 1154 may include a circuit board having wiring patterns that may be electrically connected, such as a rigid printed circuit board (PCB), a flexible PCB, and a rigid flexible PCB. However, the present invention is not limited to these types.

Details between the Hall sensor unit 1153 and the first board part 1154, which will be described below, will be described below.

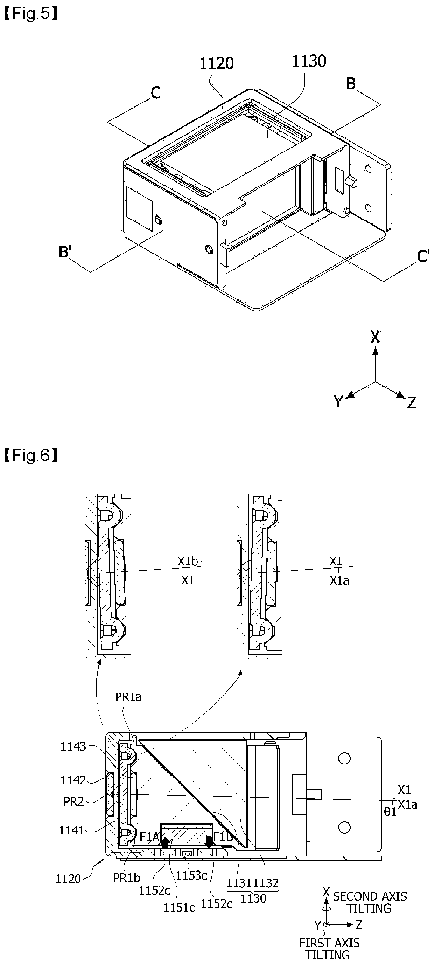

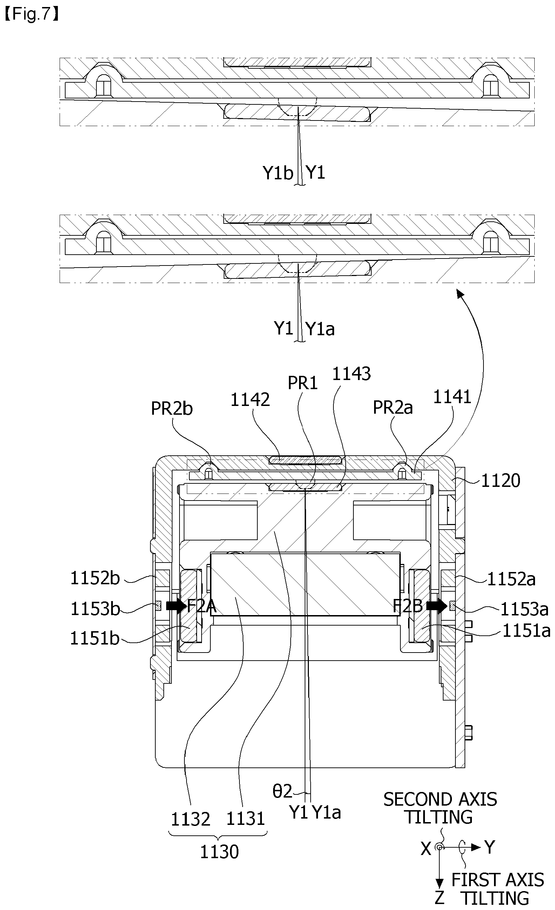

FIG. 5 is a perspective view of the first camera actuator according to an embodiment from which a shield can and a board are removed, FIG. 6 is a cross-sectional view along line BB' of FIG. 5, and FIG. 7 is a cross-sectional view along line CC' of FIG. 5.

Referring to FIGS. 5 to 7, the first coil 1152a may be located in the first housing side part 1121.

Further, the first coil 1152a and the first magnet 1151a may be located to face each other. The first magnet 1151a may at least partially overlap the first coil 1152a in the second direction (the Y-axis direction).

Further, the second coil 1152b may be located in the second housing side part 1122. Accordingly, the second coil 1152b and the second magnet 1151b may be located to face each other. The second magnet 1151b may at least partially overlap the second coil 1152b in the second direction (the Y-axis direction).

Further, the first coil 1152a and the second coil 1152b may overlap each other in the second direction (the Y-axis direction), and the first magnet 1151a and the second magnet 1151b may overlap each other in the second direction (the Y-axis direction). Due to this configuration, an electromagnetic force applied to the outer surface (the first holder outer surface and the second holder outer surface) of the holder is located on a parallel axis in the second direction (the Y-axis direction), so that the X-axis tilting may be accurately and precisely performed.

Further, a first accommodation groove (not illustrated) may be located in a fourth holder outer surface. Further, first protrusions PR1a and PR1b may be arranged in the first accommodation groove. Accordingly, when the X-axis tilting is performed, the first protrusions PR1a and PR1b may serve as a reference axis (or a rotational axis) of the tilting. Accordingly, the rotation plate 1141 and the mover 1130 may be moved in a left-right direction.

As described above, a second protrusion PR2 may be seated on a groove in the inner surface of the fourth housing side part 1124. Further, when the Y-axis tilting is performed, the rotation plate and the mover may rotate using the second protrusion PR2 as a reference axis of the Y-axis tilting.

According to an embodiment, the OIS may be performed by the first protrusion and the second protrusion.

Referring to FIG. 6, the Y-axis tilting may be performed. That is, the mover 1130 may rotate in the first direction (the X-axis direction) to implement the OIS.

In an embodiment, the third magnet 1151c disposed below the holder 1131 may form an electromagnetic force with the third coil 1152c to tilt or rotate the mover 1130 in the first direction (the X-axis direction).

In detail, the rotation plate 1141 may be coupled to the first housing 1120 and the mover 1130 by the first magnetic body 1142 inside the first housing 1120 and the second magnetic body 1143 inside the mover 1130. Further, the first protrusions PR1a and PR1b may be separated in the first direction (the X-axis direction) and supported by the first housing 1120.

Further, the rotation plate 1141 may rotate or tilt using the second protrusion PR2 protruding toward the mover 1130 as a reference axis (or a rotational axis). That is, the rotation plate 1141 may perform the Y-axis tilting using the second protrusion PR2 as a reference axis.

For example, the OIS may be implemented by rotating the mover 1130 by a first angle θ1 in the X-axis direction (X1->X1b) by first electromagnetic forces F1A and F1B between the third magnet 1151c disposed in a third seating groove and the third coil 1152c disposed in a third board side part. The first angle θ1 may be in the range of ±1° to ±3°. However, the present invention is not limited thereto.

Referring to FIG. 7, the X-axis tilting may be performed. That is, the mover 1130 may rotate in the second direction (the Y-axis direction) to implement the OIS.

The OIS may be implemented while the mover 1130 tilts or rotates (or tilts in the X-axis) in the Y-axis direction.

In an embodiment, the first magnet 1151a and the second magnet 1151b arranged in the holder 1131 may respectively generate electromagnetic forces with the first coil 1152a and the second coil 1152b, thereby tilting or rotating the rotation plate 1141 and the mover 1130 in the second direction (the Y-axis direction).

The rotation plate 1141 may rotate or tilt (or tilt in the X-axis) in the second direction using the first protrusion PR1 as a reference axis (or a rotational axis).

For example, the OIS may be implemented by rotating the mover 1130 by a second angle θ2 in the Y-axis direction (Y1->Y1a) by second electromagnetic forces F2A and F2B between the first and second magnets 1151a and 1151b arranged in the first seating groove and the first and second coil parts 1152a and 1152b disposed in first and second board side parts. The second angle θ2 may be in the range of ±1° to ±3°. However, the present invention is not limited thereto.

In this way, the second actuator according to the embodiment may control the rotation plate 1141 and the mover 1130 to be rotated in the first direction (the X-axis direction) or the second direction (the Y-axis direction) by the electromagnetic force between the driving magnet in the holder and the driving coil disposed in the housing, to minimize occurrence of the decenter phenomenon or the tilting phenomenon when the OIS is implemented, thereby providing the best optical properties. Further, as described above, the "Y-axis tilting" corresponds to rotating or tilting in the first direction (the X-axis direction), and the "X-axis tilting" corresponds to rotating or tilting in the second direction (the Y-axis direction).

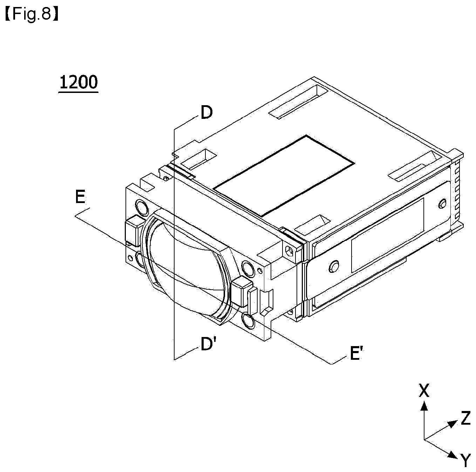

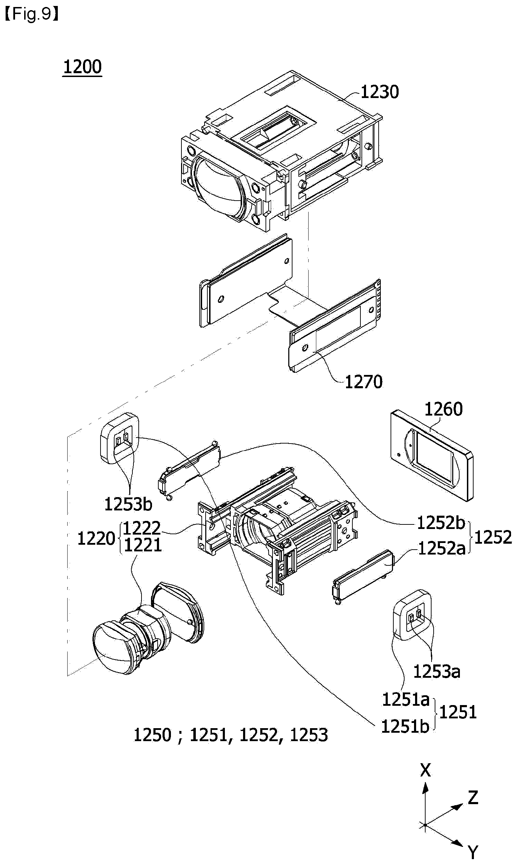

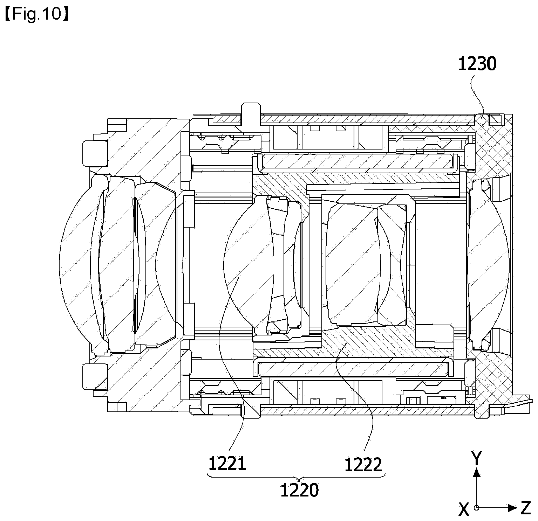

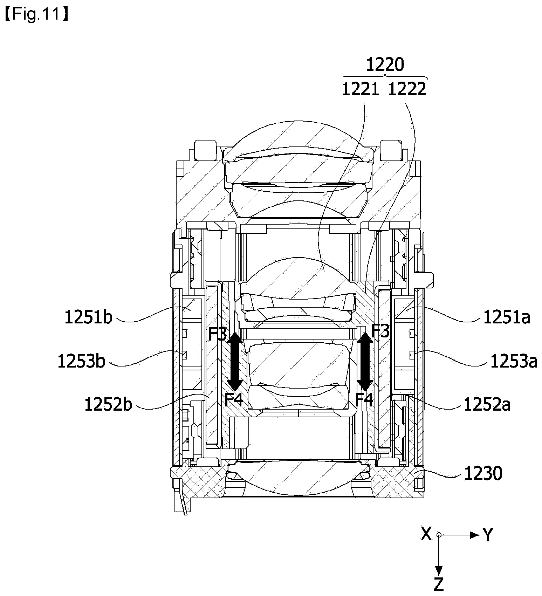

FIG. 8 is a perspective view of a second camera actuator according to an embodiment, FIG. 9 is an exploded perspective view of the second camera actuator according to the embodiment, FIG. 10 is a cross-sectional view along line DD' of FIG. 8, and FIG. 11 is a cross-sectional view along line EE' of FIG. 8.

Referring to FIGS. 8 to 11, the second camera actuator 1200 according to an embodiment may include a lens part 1220, a second housing 1230, a second driving part 1250, a base part (not illustrated), and a second board part 1270. Furthermore, the second camera actuator 1200 may further include a second shield can (not illustrated), an elastic part (not illustrated), and a bonding member (not illustrated). Furthermore, the second camera actuator 1200 according to an embodiment may further include the image sensor IS.

The second shield can (not illustrated) may be located in a region (for example, the outermost side) of the second camera actuator 1200 and located to surround the components (the lens part 1220, the second housing 1230, the elastic part (not illustrated), the second driving part 1250, the base part (not illustrated), the second board part 1270, and the image sensor IS) which will be described below.

The second shield can (not illustrated) may block or reduce electromagnetic waves generated from the outside. Accordingly, occurrence of malfunction of the second driving part 1250 can be reduced.

The lens part 1220 may be located inside the second shield can (not illustrated). The lens part 1220 may move in the third direction (the Z-axis direction). Accordingly, the above-described AF function can be performed.

In detail, the lens part 1220 may include a lens assembly 1221 and a bobbin 1222.

The lens assembly 1221 may include at least one lens. Further, although the plurality of lens assemblies 1221 may be provided, the following description will be made based on one lens assembly 1221.

The lens assembly 1221 may be coupled to the bobbin 1222 and may move in the third direction (the Z-axis direction) by an electromagnetic force generated from a fourth magnet 1252a and a second magnet 1252b coupled to the bobbin 1222.

The bobbin 1222 may include an opening region surrounding the lens assembly 1221. Further, the bobbin 1222 may be coupled to the lens assembly 1221 in various methods. Further, the bobbin 1222 may include a groove in a side surface thereof and may be coupled to the fourth magnet 1252a and the second magnet 1252b through the groove. The groove may be coated with a bonding member or the like.

Further, the bobbin 1222 may be coupled to the elastic part (not illustrated) at an upper end and a rear end thereof. Accordingly, the bobbin 1222 may move in the third direction (the Z-axis direction) and may be supported by the elastic part (not illustrated). That is, the bobbin 1222 may be maintained in the third direction (the Z-axis direction) while a position of the bobbin 1222 is maintained. The elastic part (not illustrated) may be formed of a leaf spring.

The second housing 1230 may be disposed between the lens part 1220 and the second shield can (not illustrated). Further, the second housing 1230 may disposed to surround the lens part 1220.

A hole may be formed at a side portion of the second housing 1230. A fourth coil 1251a and a fifth coil 1251b may be arranged in the hole. The hole may be located to correspond to the groove of the bobbin 1222.

The fourth magnet 1252a may be located to face the fourth coil 1251a. Further, the second magnet 1252b may be located to face the fifth coil 1251b.

The elastic part (not illustrated) may include a first elastic member (not illustrated) and a second elastic member (not illustrated). The first elastic member (not illustrated) may be coupled to an upper surface of the bobbin 1222. The second elastic member (not illustrated) may be coupled to a lower surface of the bobbin 1222. Further, as described above, the first elastic member (not illustrated) and the second elastic member (not illustrated) may be formed of a leaf spring. Further, the first elastic member (not illustrated) and the second elastic member (not illustrated) may provide elasticity for the movement of the bobbin 1222.

The second driving part 1250 may provide driving forces F3 and F4 for moving the lens part 1220 in the third direction (the Z-axis direction). The second driving part 1250 may include a driving coil 1251 and a driving magnet 1252.

The lens part 1220 may move in the third direction (the Z-axis direction) by an electromagnetic force formed between the driving coil 1251 and the driving magnet 1252.

The driving coil 1251 may include the fourth coil 1251a and the fifth coil 1251b. The fourth coil 1251a and the fifth coil 1251b may be arranged in a hole formed at a side portion of the second housing 1230. Further, the fourth coil 1251a and the fifth coil 1251b may be electrically connected to the second board part 1270. Accordingly, the fourth coil 1251a and the fifth coil 1251b may receive a current or the like through the second board part 1270.

The driving magnet 1252 may include the fourth magnet 1252a and a fifth magnet 1252b. The fourth magnet 1252a and the fifth magnet 1252b may be arranged in the above-described groove of the bobbin 1222 and may be located to correspond to the fourth coil 1251a and the fifth coil 1251b.

Further, the second driving part 1250 may include a Hall sensor unit 1253. In an embodiment, the second driving part 1250 may include a fourth Hall sensor 1253a and a fifth Hall sensor 1253b. As described above, the fourth Hall sensors 1253a and the fifth Hall sensors 1253b may be plural and connected in series as will be described below.

The base part (not illustrated) may be located between the lens part 1220 and the image sensor IS. A component such as a filter may be fixed to the base part (not illustrated). Further, the base part (not illustrated) may be disposed to surround the image sensor IS. Due to this configuration, since the image sensor IS is free from contamination such as foreign substances, the reliability of an element can be improved.

Further, the second camera actuator may be a zooming actuator or an AF actuator. For example, the second camera actuator may support one or more lenses and move the lenses in response to the predetermined control signal of the controller to perform the AF function or the zooming function.

Further, the second camera actuator may perform a fixed zoom or a continuous zoom. For example, the second camera actuator may provide the movement of the lens assembly 1221.

As well, the second camera actuator may include a plurality of lens assemblies. For example, at least one of the first lens assembly (not illustrated), the second lens assembly (not illustrated), the third lens assembly (not illustrated), and a guide pin (not illustrated) may be arranged in the second camera actuator. The above contents may be applied to this. Accordingly, the second camera actuator may perform a high-magnification zooming function through a driving part. For example, the first lens assembly (not illustrated) and the second lens assembly (not illustrated) may be moving lenses that are moved through the driving part and the guide pin (not illustrated), and the third lens assembly (not illustrated) may be a fixed lens, but the present invention is not limited thereto. For example, the third lens assembly (not illustrated) may function as a focator that images light at a specific location, and the first lens assembly (not illustrated) may function as a variator that re-images, at another location, the image formed by the third lens assembly (not illustrated) that is the focator. Meanwhile, in the first lens assembly (not illustrated), a distance to a subject or an image distance is greatly changed, and thus a magnification change may be large. The first lens assembly (not illustrated) that is the variator may perform an important role in changing a focal length or a magnification of the optical system. Meanwhile, an image point formed by the first lens assembly (not illustrated) that is the variator may be slightly different according to a location. Accordingly, the second lens assembly (not illustrated) may perform a location compensation function for the image formed by the variator. For example, the second lens assembly (not illustrated) may perform a compensator function that accurately forms, at an actual location of an image sensor, an image point formed by the first lens assembly (not illustrated) that is the variator.

The image sensor IS may be located inside or outside the second camera actuator. In an embodiment, as illustrated, the image sensor IS may be located inside the second camera actuator. The image sensor IS may receive light and convert the received light into an electric signal. Further, the image sensor IS may have a plurality of pixels in the form of an array. Further, the image sensor IS may be located on an optical axis.

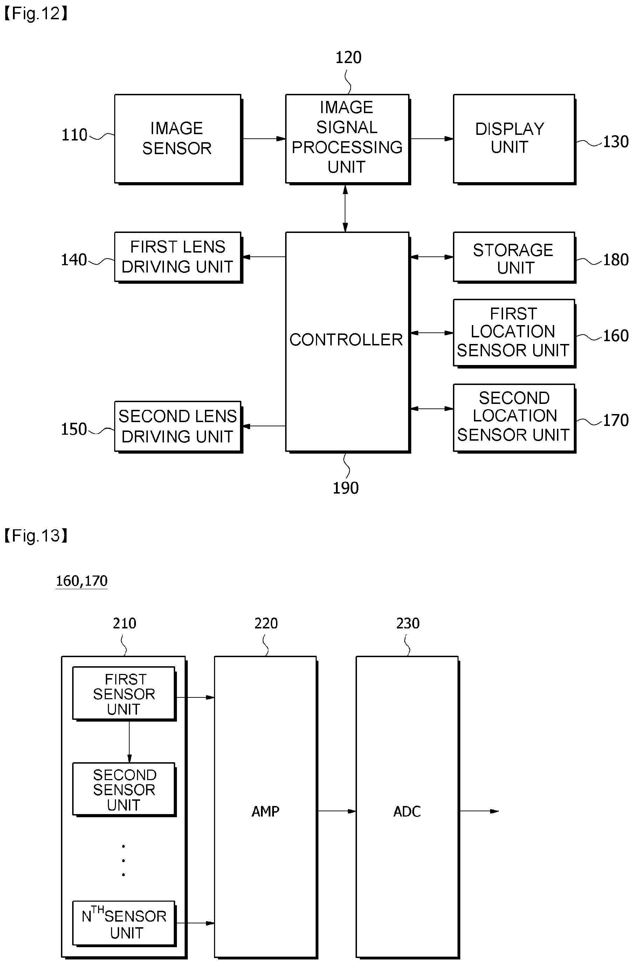

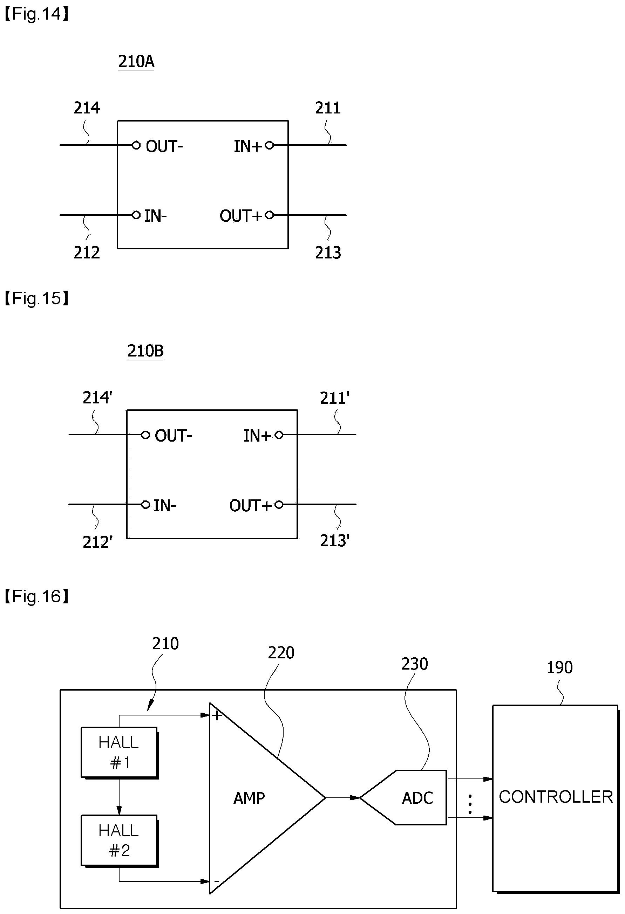

FIG. 12 is a block diagram illustrating a configuration of a camera module according to an embodiment of the present invention, FIG. 13 is a block diagram illustrating a detailed configuration of a location sensor part of FIG. 12, FIGS. 14 and 15 are views for describing a connection relationship of a sensor unit of FIG. 13, and FIG. 16 is a view for describing the connection relationship of the sensor unit according to an embodiment of the present invention.

Referring to FIG. 12, the camera module may include an image sensor 110, an image signal processing unit 120, a display unit 130, a first lens driving part 140, a second lens driving part 150, a first location sensor part 160, a second location sensor part 170, a storage unit 180, and a controller 190.

As described above, the image sensor 110 processes an optical image of the subject formed through a lens. To this end, the image sensor 110 may pre-process the image acquired through the lens. Further, the image sensor 110 may convert the pre-processed image into electrical data and output the converted electrical data.

The image sensor 110 corresponds to the image sensor IS. Further, the image sensor 110 has a form in which a plurality of photodetectors are integrated as respective pixels, converts image information on the subject into electrical data (for example, an image signal), and outputs the converted electrical data. The image sensor 110 accumulates the quantity of input light and outputs an image photographed by the lens according to the accumulated quantity of light in synchronization with a vertical synchronization signal. In this case, the image is acquired by the image sensor 110 that converts light reflected from the subject into an electrical signal. Meanwhile, a color filter is required to obtain a color image using the image sensor 110, and for example, a color filter array (CFA) filter may be employed. The CFA allows only light representing one color to pass through each pixel, has a regularly arranged structure, and has various shapes according to an arrangement structure.

The image signal processing unit 120 processes the image output through the image sensor 110 in units of frames. In this case, the image signal processing unit 120 may be referred to as an image signal processor (ISP).

In this case, the image signal processing unit 120 may include a lens shading compensation unit (not illustrated). The lens shading compensation unit is a block for compensating for a lens shading phenomenon in which the quantities of light in a center and an edge region of the image are different, receives a lens shading setting value from the controller 190, which will be described below, and compensates for the color in the center and the edge region of the image.

Furthermore, the lens shading compensation unit may receive a shading variable set differently according to the type of illumination and process lens shading of the image according to the received variable. Accordingly, the lens shading compensation unit may process the lens shading by applying different shading degrees according to the type of illumination. Meanwhile, the lens shading compensation unit may receive the shading variable that is set differently according to an automatic exposure weight applied to a specific region of the image to prevent a saturation phenomenon occurring in the image and may process the lens shading of the image according to the received variable. More specifically, the lens shading compensation unit compensates for a brightness change occurring in an edge region of an image signal as the automatic exposure weight is applied to a central region of the image signal. That is, when the image signal is saturated by the illumination, the intensity of light is decreased from the center to the outside in the form of a concentric circle, and thus the lens shading compensation unit compensates for in terms of the brightness compared to the center by amplifying an edge signal of the image signal.

Meanwhile, the image signal processing unit 120 may measure the sharpness of the image acquired through the image sensor 110. That is, the image signal processing unit 120 may measure the sharpness of the image to check focus accuracy of the image acquired through the image sensor 110. The sharpness may be measured for each image obtained according to a location of a focus lens.

The display unit 130 displays the captured image according to control of the controller 190, which will be described below, and displays a setting screen required for capturing a picture or a screen for selecting an operation of a user.

The first lens driving part 140 may correspond to the first driving part 1140 (see FIG. 4). That is, the first lens driving part 140 may perform an electromagnetic interaction between the first to third coils and the first to third magnets in response to the control signal received from the controller 190. Further, the OIS may be performed by this interaction.

The second lens driving part 150 may correspond to the second driving part 1250 (see FIG. 8). That is, the second lens driving part 150 may perform an electromagnetic interaction between the fourth to fifth coils and the fourth to fifth magnets in response to the control signal received from the controller 190. Further, the zooming or the AF may be performed by this interaction.

For example, the focus lens may be moved in the optical axis direction.

The first location sensor part 160 includes a plurality of Hall sensors of the first camera actuator, and accordingly, detects a location of the mover or the optical member. That is, the first location sensor part 160 may detect the location of the first driving part disposed in the mover. This is for controlling the location of a first mover or a prism. Further, the first location sensor part 160 provides location data for moving the mover or the prism.

The second location sensor part 170 includes a plurality of Hall sensors of the second camera actuator 1200, and accordingly, detects a location of the lens part 1220 (see FIG. 9). That is, the second location sensor part 170 may detect a location of the second driving part adjacent to the lens part 1220. This is for controlling a location of the lens part. Further, the second location sensor part 170 provides location data for moving the lens part.

The storage unit 180 stores data required for operating the camera module. In particular, the storage unit 180 may store information on a zoom location and a focus location for each distance to the subject. That is, the focus location may be a location of the focus lens for precisely focusing the subject. Further, the focus location may be changed according to the zoom location for a zoom lens and the distance to the subject. Thus, the storage unit 180 stores data for the zoom location according to the distance and the focus location corresponding to the zoom location.

The controller 190 controls an overall operation of the camera module. In particular, the controller 190 may control the first location sensor part 160 and the second location sensor part 170 to provide the AF function.

In other words, the controller 190 detects the location of the mover or the optical member through the first location sensor part 160. Preferably, the controller 190 detects a current location of the mover or the optical member through the first location sensor part 160 to move the mover or the optical member to a target location.

Further, when the current location of the mover or the optical member is detected through the first location sensor part 160, the controller 190 supplies, to the first lens driving part 140, a control signal for moving the mover or the optical member to a target location on the basis of the current location of the mover or the optical member.

Further, the controller 190 detects the location of the lens part through the second location sensor part 170. The controller 190 detects a current location of the lens part through the second location sensor part 170 to move the lens part to a target location.

Further, when the current location of the lens part is detected through the second location sensor part 170, the controller 190 may supply, to the second lens driving part 150, a control signal for moving the lens part to a target location on the basis of the current location of the lens part.

In this case, differential signals of detection signals detected by a plurality of sensor units constituting respective sensor parts through the first location sensor part 160 and the second location sensor part 170 may be input to the controller 190.

In other words, in the present invention, each of the first location sensor part 160 and the second location sensor part 170 includes a plurality of sensor units (corresponding to the "Hall sensor" described above). Further, the plurality of sensor units perform detection operations at installation locations thereof. That is, the plurality of sensor units may detect the location of the mover, the location of the lens part, and the like. In this case, in the present invention, the locations of the mover or the optical member and the lens part can be detected using the differential signals of the detection signals acquired through the plurality of sensor units.

In this case, the signals detected by the plurality of sensor units may be input to the controller 190, and accordingly, the locations of the mover or the optical member or the second lens assembly can be detected on the basis of the differential signals for the signals.

However, in the case of the above structure, an amplifier and an analog-to-digital converter should be arranged in each sensor unit. Further, the controller 190 may include a plurality of connection terminals connected to the analog-to-digital converter connected to each sensor unit.

In the present invention, digital data for the differential signal is acquired from a front-end stage, and accordingly, the acquired digital data may be input to the controller 190.

In other words, in the present invention, the digital data may be acquired by the first location sensor part 160 and the second location sensor part 170, and accordingly, only the acquired digital data may be input to the controller 190.

Hereinafter, the first location sensor part 160 and the second location sensor part 170 will be described in detail.

The first location sensor part 160 and the second location sensor part 170 may include the same configuration, and accordingly, may be connected to the controller 190.

Referring to FIG. 13, each of the first location sensor part 160 and the second location sensor part 170 includes a plurality of sensor units 210, an amplifier 220, and an analog-digital converter 230.

The plurality of sensor units 210 include a sensor for detecting a location. Preferably, the plurality of sensor units 210 may be a plurality of Hall sensors, and the Hall sensors may correspond to the Hall sensor described in the first camera actuator and the second camera actuator. As a modification, the plurality of sensor units 210 may include a plurality of induction coils.

The plurality of sensor units 210 may be connected to each other between sensors for the same axis movement or axis tilting in each actuator, and the sensors may be connected to the amplifier (AMP) 220. A connection structure of the plurality of sensor units 210 will be described below in more detail.

In the present invention, the plurality of sensor units 210 may be connected to each other, and an output terminal that is at least one terminal of the sensor unit may be connected to the amplifier 220. When there are the plurality of sensor units 210, the outermost sensor unit 210 or the sensor unit 210 connected to the outermost side may be connected to the amplifier 220. Accordingly, a signal of the sum of the detection signals detected by the sensor units may be input to the amplifier 220. The signal is expressed as the sum of sensing ranges of the sensor units, and accordingly, a sensing range of the plurality of sensor units 210 input to the amplifier 220 may be extended compared to a single sensor unit.

The amplifier 220 may include a non-inversion (+) terminal and an inversion (-) terminal. Further, the amplifier 220 differentially amplifies a signal input to the non-inversion (+) terminal and a signal input to the inversion (-) terminal and outputs the amplified signal to the analog-digital converter 230. That is, output signals for the plurality of sensor units 210 have the sizes of several mV, which may be sizes that do not proportionately match an input range of the analog-digital converter 230. Thus, the amplifier 220 differentially amplifies and outputs the signals input through the non-inversion (+) terminal and the inversion (-) terminal in order to match the input range of the analog-digital converter 230.

The analog-digital converter 230 may receive an analog signal from the amplifier 220, and accordingly, convert the received analog signal into a digital signal and output the converted digital signal. Preferably, the analog-digital converter 230 may receive the analog signal from the amplifier 220, convert the analog signal into a multi-bit digital signal, and output the converted digital signal. In this case, the output signal of the analog-digital converter 230 may be expressed as a value of 0 or 1.

In this case, the plurality of sensor units 210 according to an embodiment of the present invention may be configured as a plurality of Hall sensors.

Hereinafter, an interconnection relationship between the Hall sensors when the plurality of sensor units 210 are configured as the Hall sensors will be described.

Referring to FIG. 14, each of the Hall sensors constituting the plurality of sensor units 210 includes four terminals. In this case, two terminals among the four terminals are input terminals, and the other terminals are output terminals.

Further, the two input terminals are power input terminals, and the two output terminals are output terminals of the detection signals.

In an embodiment, the Hall sensor includes a first power terminal 211, a second power terminal 212, a first detection signal output terminal 213, and a second detection signal output terminal 214. Further, the first power terminal 211 is a terminal to which power having a positive (+) polarity is input, and the second power terminal 212 is a terminal to which power having a negative (-) polarity is input. Further, the first detection signal output terminal 213 is a terminal from which a detection signal having a positive (+) polarity is output, and the second detection signal output terminal 214 is a terminal from which a detection signal having a negative (-) polarity is output.

In this case, in the plurality of Hall sensors constituting the plurality of sensor units 210, a connection relationship between the two output terminals is different according to locations of the Hall sensors arranged on the camera module.

That is, in each of the plurality of Hall sensors, the first power terminal 211 may be connected to a positive (+) polarity of a power, and the second power terminal 212 may be connected to a negative (-) polarity of the power (or the ground).

Further, the detection signal output terminals of each of the plurality of Hall sensors may have a different connection relationship according to the arrangement location. In this case, the number of the plurality of Hall sensors is at least two. In other words, the plurality of sensor units may include at least two sensor units.

First, a case in which the plurality of sensor units are configured with three Hall sensors will be described.

In an embodiment, in one Hall sensor between two Hall sensors, the first detection signal output terminal 213 and the second detection signal output terminal 214 are connected to the output terminals of the two Hall sensors arranged on the outside.

In this case, a case in which the plurality of sensor units are configured with three Hall sensors will be described. When the plurality of sensor units are configured with three Hall sensors, two Hall sensors are arranged on the outside, and the other Hall sensor is arranged between the two Hall sensors arranged on the outside. In an embodiment, in the one Hall sensor disposed between the two Hall sensors arranged on the outside, the first detection signal output terminal 213 and the second detection signal output terminal 214 are connected to the output terminals of the two Hall sensors arranged on the outside. Further, in each of the two Hall sensors arranged on the outside, one output terminal among the two output terminals is connected to the amplifier 220, and the other one output terminal is connected to a neighboring Hall sensor.

Further, a case in which the plurality of sensor units are configured with two Hall sensors will be described. In an embodiment, between the two Hall sensors, the first detection signal output terminal of one Hall sensor and the second detection signal output terminal of the other Hall sensor may be connected to each other. Further, the second detection signal output terminal of the one Hall sensor may be connected to the amplifier 220, and the first detection signal output terminal of the other one Hall sensor may be connected to the amplifier 220. Hereinafter, a description will be made with reference to this.

For example, referring to FIGS. 14 and 15, the sensor unit may include a first Hall sensor 210A and a second Hall sensor 210B connected in series. In this case, the first Hall sensor 210A and the second Hall sensor 210B may correspond to the first Hall sensor 1153a and the second Hall sensor 1153b. Alternatively, the first Hall sensor 210A and the second Hall sensor 210B may correspond to the plurality of third Hall sensors 1153c. Further, the first Hall sensor 210A and the second Hall sensor 210B may correspond to a Hall sensor of the second camera actuator. Hereinafter, a description will be made on the basis of a state in which the first Hall sensor 210A and the second Hall sensor 210B may correspond to the first Hall sensor 1153a and the second Hall sensor 1153b.

The first Hall sensor 210A may include the first detection signal output terminal 213 and the second detection signal output terminal 214. In this case, the first detection signal output terminal 213 is connected to the non-inversion (+) terminal of the amplifier 220, and the second detection signal output terminal 214 is connected to the first detection signal terminal 213' of the second Hall sensor 210B connected in series to the first Hall sensor 210A. In other words, the second detection signal output terminal 214 of the first Hall sensor 210A may be connected to the first detection signal output terminal 213' of the second Hall sensor 210B.

The second Hall sensor 210B may also include the first detection signal output terminal 213' and a second detection signal output terminal 214'. The first detection signal output terminal 213' of the second Hall sensor 210B may be connected to the second detection signal output terminal 214 of the first Hall sensor 210A, and the second detection signal output terminal 214' may be connected to the inversion (-) terminal of the amplifier 220.

As described above, in the camera actuator according to an embodiment, the plurality of Hall sensors for performing location detection for the same axis tilting may have output terminals connected in series. In the case of this connection structure, a signal corresponding to the sum of the sensing ranges of the plurality of Hall sensors may be input to the amplifier 220. Further, the amplifier 220 may differentially amplify and output the signal corresponding to the sum of the input sensing ranges.

Accordingly, in the present invention, a differential sensing method having a wider detection range than that of a single sensing method may be provided. Further, in the present invention, the differential signal according to coupling of the plurality of location sensors is input to an input terminal of the amplifier, and thus exposure of an output signal of the location sensor to an offset noise in a path to the controller can be minimized.

Further, in the present invention, as the differential signals for the plurality of location sensors are output in the sensing part including the plurality of location sensors, the amplifier, and the analog-digital converter, the number of patterns/pins connected from the driving part to a printed circuit board (PCB) can be minimized, and accordingly, a space of the PCB can be saved.

Further, in the present invention, since differential values for the plurality of location sensors with respect to common mode noise are obtained, characteristics strong to not only internal noise but also external noise are achieved.

Further, in the present invention, according to a usage environment of the camera module, only the detection signal of a specific location sensor is transmitted to an amplifier stage or the differential signals for the plurality of location sensors are transmitted to the amplifier stage. Accordingly, in the present invention, an optimum detection signal can be obtained in an environment in which sensing sensitivity should be high and an environment in which a sensing range should be large.

Referring to FIG. 16, one output terminal among two output terminals of each of the Hall sensors (the first Hall sensor and the second Hall sensor) connected to the outside among the plurality of Hall sensors is connected to a corresponding one of the non-inversion (+) terminal and the inversion (-) terminal of the amplifier 220, and the output terminals included in the other Hall sensors are connected to the output terminals of the neighboring Hall sensors. Accordingly, in the present invention, the number of input pins required by the controller 190 can be minimized, and exposure of the detection signal to offset noise on a path moving to the controller 190 can be minimized.

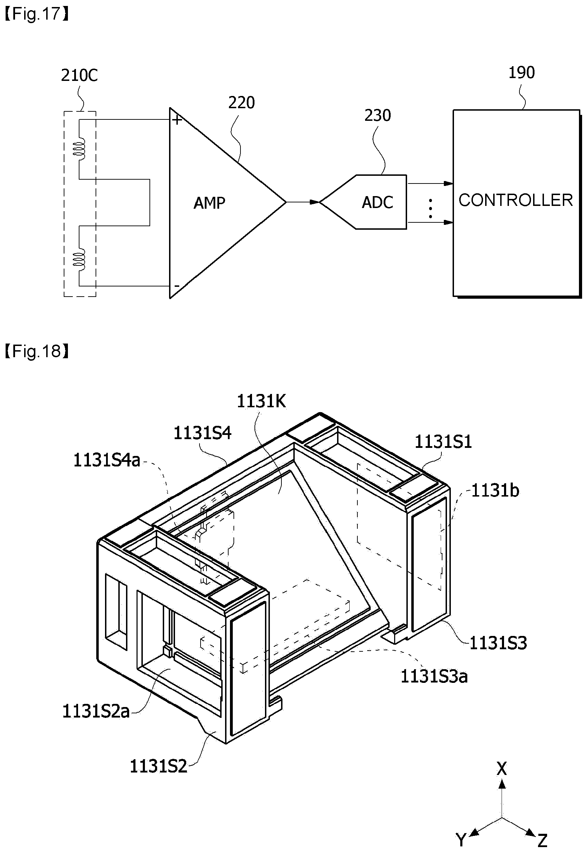

FIG. 17 is a view for describing a connection relationship of a sensor unit according to another embodiment of the present invention.

Referring to FIG. 17, the plurality of sensor units include a plurality of induction coils 210C. Further, each of the plurality of induction coils includes two output terminals. In this case, one of the two output terminals may be one end of the induction coil, and the other one of the two output terminals may be the other end of the induction coil.

Further, ends of the plurality of induction coils may be connected to ends of the neighboring induction coils or connected to the non-inversion (+) terminal or the inversion (-) terminal of the amplifier 220 to correspond to a connection relationship of the Hall sensors.

That is, a first output terminal of a firstly arranged induction coil may be connected to the non-inversion (+) terminal of the amplifier 220. Further, a second output terminal of the firstly arranged induction coil may be connected to a first output terminal of a neighboring next induction coil.

Further, a first output terminal of the secondly arranged induction coil may be connected to a second output terminal of the previously arranged induction coil, and a second output terminal of the secondly arranged induction coil may be connected to a first output terminal of a next induction coil.

Further, a first output terminal of a lastly arranged induction coil may be connected to a second output terminal of the previously arranged induction coil, and a second output terminal of the lastly arranged induction coil may be connected to the inversion (-) terminal of the amplifier 220.

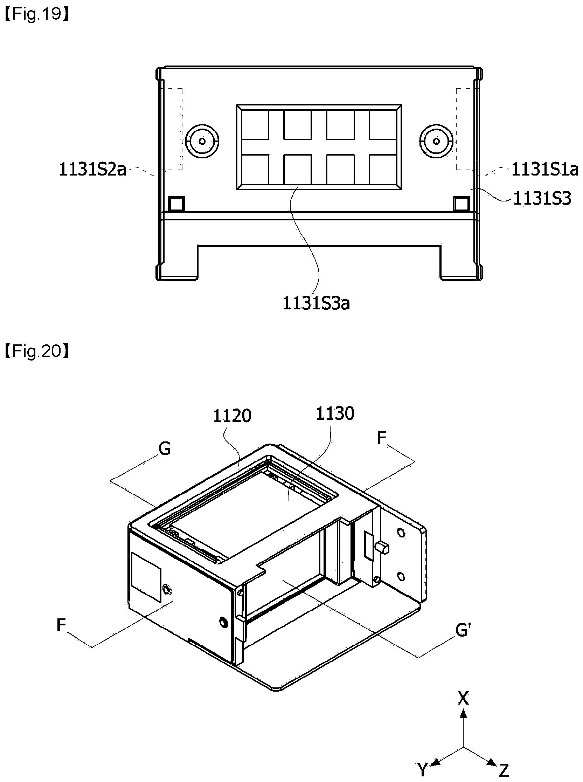

FIG. 18 is a perspective view of a holder according to an embodiment, and FIG. 19 is a bottom view of the holder according to the embodiment.

Referring to FIGS. 18 to 19, the holder 1131 may include a seating surface 1131k on which the optical member 1132 is seated. The seating surface 1131k may be an inclined surface. Further, the holder 1131 may include a stepped portion 1131b on the seating surface 1131k. Further, in the holder 321, the stepped portion 1131b may be coupled to a boss 1132a of the optical member 1132.

The holder 1131 may include a plurality of outer surfaces. For example, the holder 1131 may include a first outer prism surface 1131S1, a second outer prism surface 1131S2, a third outer prism surface 1131S3, and a fourth outer prism surface 1131S4.

The first outer prism surface 1131S1 may be located to face the second outer prism surface 1131S2. That is, the first outer prism surface 1131S1 may be arranged to be symmetrical to the second outer prism surface 1131S2 with respect to the first direction (the X-axis direction).

The first outer prism surface 1131S1 may be located to be adjacent to the first housing side part 1121 and face the first housing side part 1121. Further, the second outer prism surface 1131S2 may be located to be adjacent to the second housing side part 1122 and face the second housing side part 1122.

Further, the first outer prism surface 1131S1 may include a first seating groove 1131S1a. Further, the second outer prism surface 1131S2 may include a second seating groove 1131S2a. The first seating groove 1131S1a and the second seating groove 1131S2a may be arranged to be symmetrical to each other with respect to the first direction (the X-axis direction).

Further, the first magnet 1151a may be disposed on the first seating groove 1131S1a, and the second magnet 1151b may be disposed in the second seating groove 1131S2a. The first magnet 1151a and the second magnet 1151b may be arranged to be symmetric to each other with respect to the first direction (the X-axis direction).

Accordingly, as described above, due to locations of the first and second seating grooves and the first and second magnets, an electromagnetic force induced by each magnet may be applied to the first outer prism surface S1231S1 and the second outer prism surface 1131S2 along the same axis. For example, a region (for example, a portion having the strongest electromagnetic force) applied onto the first outer prism surface S1231S1 and a region (for example, a portion having the strongest electromagnetic force) applied onto the second outer prism surface S1231S1 may be located on an axis parallel to the second direction (the Y-axis direction). Accordingly, the X-axis tilting may be accurately performed.

The first magnet 1151a may be disposed on the first seating groove 1131S1a, and the second magnet 1151b may be disposed in the second seating groove 1131S2a.

The third outer prism surface 1131S3 may be an outer surface that is in contact with the first outer prism surface 1131S1 and the second outer prism surface 1131S2 and extends from one side of the first outer prism surface 1131S1 and the second outer prism surface 1131S2 in the second direction (the Y-axis direction). Further, the third outer prism surface 1131S3 may be located between the first outer prism surface 1131S1 and the second outer prism surface 1131S2. The third outer prism surface 1131S3 may be a bottom surface of the holder 1131.

Further, the third outer prism surface 1131S3 may include a third seating groove 1131S3a. The third magnet 1151c may be disposed in the third seating groove 1131S3a. The third outer prism surface 1131S3 may be located to face the third housing side part 1123. Further, the third housing hole 1123a and the third seating groove 1131S3a may at least partially overlap each other in the first direction (the X-axis direction). Accordingly, the third magnet 1151c in the third seating groove 1131S3a and the third coil 1152c in the third housing hole 1123a may be located to face each other. Further, the third magnet 1151c and the third coil 1152c may generate an electromagnetic force, and thus the second camera actuator may be tilted in the Y axis.

Further, the X-axis tilting may be performed by the plurality of magnets (the first and second magnets 1151a and 1151b), but the Y-axis tilting may be performed only by the third magnet 1151c. In an embodiment, the area of the third seating groove 1131S3a may be greater than the area of the first seating groove 1131S1a or the second seating groove 1131S2a. Due to this configuration, the Y-axis tilting may be performed using current control similar to that of the X-axis tilting.

The fourth outer prism surface 1131S4 may be an outer surface that is in contact with the first outer prism surface 1131S1 and the second outer prism surface 1131S2 and extends from the first outer prism surface 1131S1 and the second outer prism surface 1131S2 in the first direction (the X-axis direction). Further, the fourth outer prism surface 1131S4 may be located between the first outer prism surface 1131S1 and the second outer prism surface 1131S2.

The fourth outer prism surface 1131S4 may include a fourth seating groove 1131S4a. The rotation plate 1141 may be located in the fourth seating groove 1131S4a.

The fourth seating groove 1131S4a may be located to face a first surface of the rotation plate.

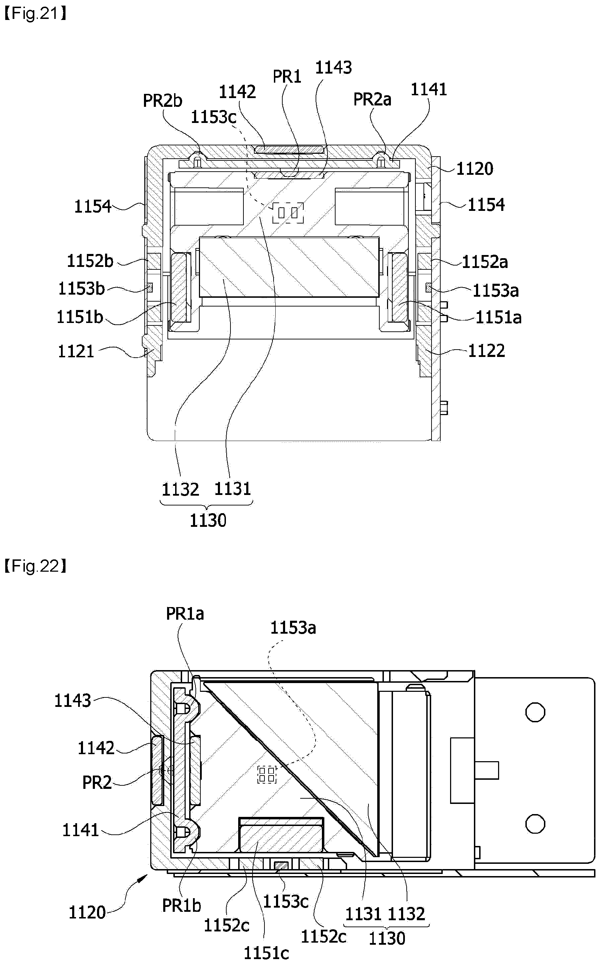

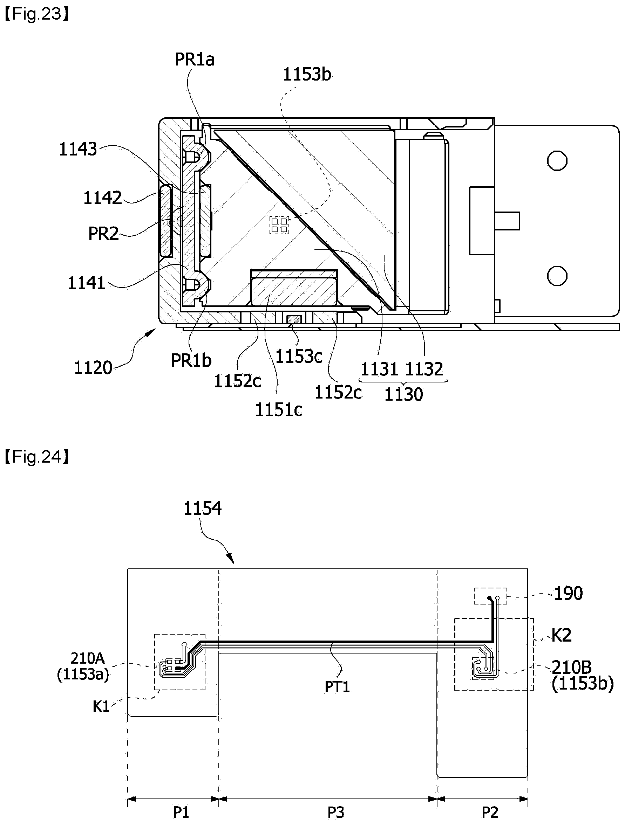

FIG. 20 is a perspective view of a first camera actuator according to an embodiment, FIG. 21 is a cross-sectional view along line FF' of FIG. 20, FIG. 22 is a cross-sectional view along line GG' of FIG. 20, and FIG. 23 is a view when viewed from another direction in FIG. 22.

Referring to FIGS. 20 to 23, the first board part 1154 may be in contact with the first housing side part 1121, the second housing side part 1122, and the third housing side part 1123. The first Hall sensor 1153a, the second Hall sensor 1153b, and the third Hall sensor 1153c may be seated on the first board part 1154. Hereinafter, the description will be made on the basis of the above description for the sensor unit with respect to the first Hall sensor 1153a and the second Hall sensor 1153b facing each other providing location data for movement of the mover or the optical member according to the X-axis tilting.

The first Hall sensor 1153a and the second Hall sensor 1153b may be seated on the first housing groove and the second housing groove, respectively. In an embodiment, the first Hall sensor 1153a and the second Hall sensor 1153b may be arranged to be symmetrical to each other with respect to the first direction (the X-axis direction) and the third direction (the Z-axis direction). In other words, the first Hall sensor 1153a and the second Hall sensor 1153b may have the same height from the third housing side part 1123 in the first direction (the X-axis direction). Further, the first Hall sensor 1153a and the second Hall sensor 1153b may be spaced the same distance from the fourth housing side part 1124 in the third direction (the Z-axis direction).

Further, locations in which the first Hall sensor 1153a and the second Hall sensor 1153b are arranged on the first board part 1154 may correspond to each other.

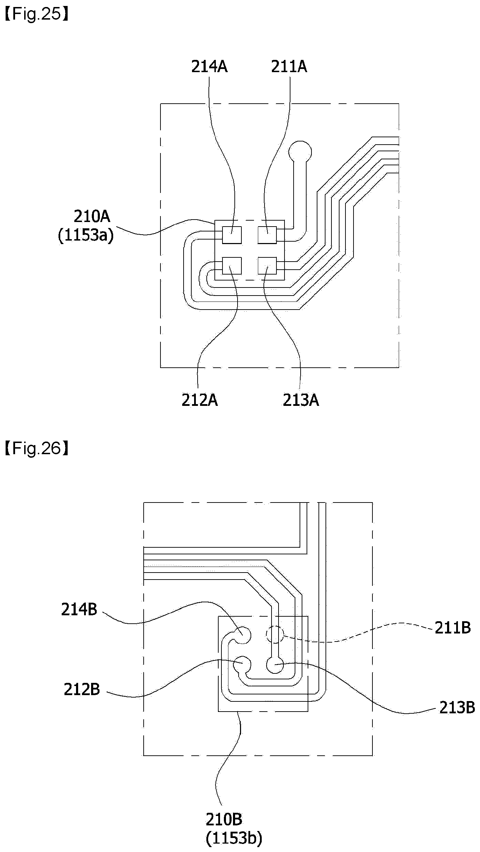

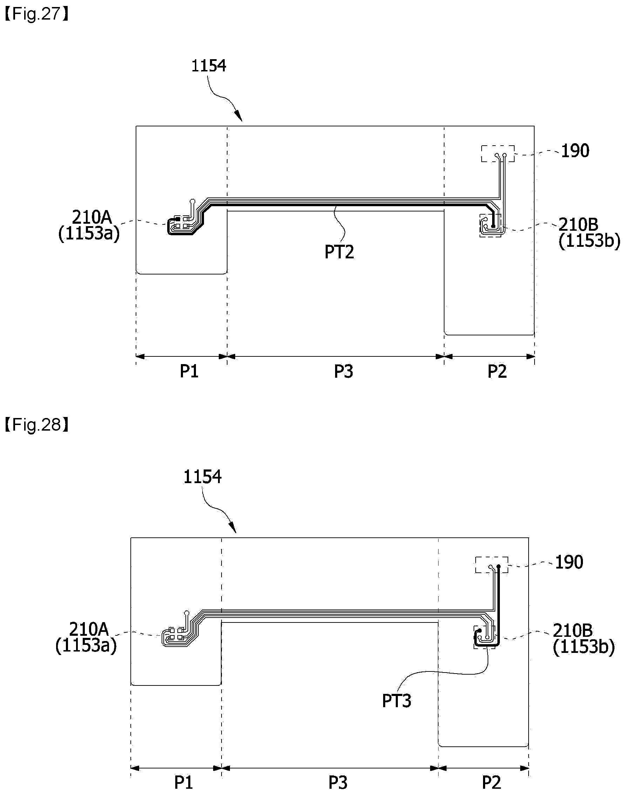

FIG. 24 is a view of a first board part according to an embodiment, FIG. 25 is an enlarged view of part K1 in FIG. 24, FIG. 26 is an enlarged view of part K2 in FIG. 24, and FIGS. 27 and 28 are views for describing a structure of a Hall sensor unit according to an embodiment.

Referring to FIGS. 24 to 26, the first board part 1154 according to the embodiment may include a first board region P1, a second board region P2, and a third board region P3.

The first board region P1 may be disposed on one side of the first board part 1154. In more detail, the first board region P1 may be disposed in contact with the first housing side part. Accordingly, the first Hall sensor and the first coil may be arranged on the first board region P1. In other words, the first sensor unit 210A may be disposed in the first board region P1. Further, the first sensor unit 210A may be surrounded by the first coil in the first board region P1. Hereinafter, the description will be made on the basis of the first sensor unit.

Further, the second board region P2 may be disposed on the other side of the first board part 1154. The second board region P2 may be disposed in contact with the second housing side part. Accordingly, the second Hall sensor and the second coil described above may be arranged on the second board region P2. In other words, the second sensor unit 210B may be disposed in the second board region P2. Hereinafter the description will be made on the basis of the second sensor unit. Further, the second board region P2 may be disposed to correspond to the first board region P1 with respect to the first direction (the X-axis direction). Accordingly, the second board region P2 may be disposed to at least partially overlap the first board region P1 in the second direction (the Y-axis direction).

Further, the second sensor unit 210B may be surrounded by the second coil in the second board region P2. In this case, each of the first sensor unit 210A and the second sensor unit 210B may be disposed in a space formed by inner surfaces of the first coil and the second coil and may not be in contact with the inner surfaces of the coils.

Further, a virtual straight line connecting the first sensor unit 210A and the second sensor unit 210B may be perpendicular to an optical axis direction. In an embodiment, the virtual straight line may be perpendicular to the first direction (the X-axis direction) and the third direction (the Z-axis direction).

Correspondingly, the first Hall sensor may overlap the second Hall sensor in the second direction (the Y-axis direction) and may be disposed to be symmetrical to the second Hall sensor with respect to the first direction (the X-axis direction).

Further, the first coil may overlap the second coil in the second direction (the Y-axis direction) and may be disposed to be symmetrical with respect to the first direction (the X-axis direction).

The third board region P3 may be disposed between the first board region P1 and the second board region P2. The third board region P3 may be disposed in contact with the third housing side part. Accordingly, the third Hall sensor and the third coil may be arranged on the third board region P3. As described above, the plurality of third Hall sensors may be provided, and the plurality of third Hall sensors may be connected in series.

As described above, the controller 190 may be electrically connected to the first sensor unit 210A and the second sensor unit 210B.

In an embodiment, the first sensor unit 210A may include a (1-1)^{th} power terminal 211A, a (2-1)^{th} power terminal 212A, a (1-1)^{th} detection signal output terminal 213A, and a (2-1)^{th} detection signal output terminal 214A.

Further, the second sensor unit 210B may include a (1-2)^{th} power terminal 211B, a (2-2)^{th} power terminal 212B, a (1-2)^{th} detection signal output terminal 213B, and a (2-2)^{th} detection signal output terminal 214B.

The above descriptions of the first power terminal, the second power terminal, the first detection signal output terminal, and the second detection signal output terminal may be equally applied to such a configuration.

The (1-1)^{th} power terminal 211A, the (2-1)^{th} power terminal 212A, the (1-1)^{th} detection signal output terminal 213A, and the (2-1)^{th} detection signal output terminal 214A of the first sensor unit 210A may be arranged to correspond to the (1-2)^{th} power terminal 211B, the (2-2)^{th} power terminal 212B, the (1-2)^{th} detection signal output terminal 213B, and the (2-2)^{th} detection signal output terminal 214B of the second sensor unit 210B, respectively. That is, the (1-1)^{th} power terminal 211A, the (2-1)^{th} power terminal 212A, the (1-1)^{th} detection signal output terminal 213A, and the (2-1)^{th} detection signal output terminal 214A of the first sensor unit 210A and the (1-2)^{th} power terminal 211B, the (2-2)^{th} power terminal 212B, the (1-2)^{th} detection signal output terminal 213B, and the (2-2)^{th} detection signal output terminal 214B of the second sensor unit 210B may be arranged to be symmetrical to each other in the first direction (the X-axis direction).

Further, the (1-1)^{th} power terminal 211A of the first sensor unit 210A may be connected to a power terminal in the first board part 1154. The power terminal may be located inside or outside the controller. Likewise, the (1-2)^{th} power terminal 211B of the second sensor unit 210B may be connected to a power terminal in the first board part 1154. The power terminal may be located inside or outside the controller.

The (2-1)^{th} power terminal 212A of the first sensor unit 210A and the (2-2)^{th} power terminal 212B of the second sensor unit 210B may be connected to each other. In an embodiment, the (2-1)^{th} power terminal 212A of the first sensor unit 210A and the (2-2)^{th} power terminal 212B of the second sensor unit 210B may be connected to the common ground.

The (1-1)^{th} detection signal output terminal 213A of the first sensor unit 210A may be electrically connected to the controller 190. In this case, the controller 190 may be disposed on any one of the first board region P1 and the second board region P2. In an embodiment, as illustrated in the drawings, the controller 190 may be disposed on the second board region P2, and a description will be made with reference to this.

The (1-1)^{th} detection signal output terminal 213A of the first sensor unit 210A may extend to the second board region P2 to be connected to the controller 190. In the first board part 1154, a first path PT1 may be formed between the controller 190 and the (1-1)^{th} detection signal output terminal 213A of the first sensor unit 210A. The first path PT1 may be an electric pattern. Further, the first path PT1 may extend form the second board region P2 to the first board region P1 via the third board region P3. That is, the first path PT1 may pass through the first board region P1, the second board region P2, and the third board region P3. Further, the first sensor unit 210A may be connected to any one of the inversion (-) terminal and the non-inversion (+) terminal of the amplifier in the controller 190 through the first path PT1.

The (2-1)^{th} detection signal output terminal 214A of the first sensor unit 210A may be electrically connected to the (1-2)^{th} detection signal output terminal 213B of the second sensor unit 210B may be electrically connected to each other. In this case, in the first board part 1154, a second path PT2 may be formed between the (2-1)^{th} detection signal output terminal 214A of the first sensor unit 210A and the (1-2)^{th} detection signal output terminal 213B of the second sensor unit 210B. That is, the second path PT2 may extend from the first board region P1 to the second board region P2. Alternatively, the second path PT2 may pass through the first board region P1, the second board region P2, and the third board region P3. Further, the second path PT2 may pass through the third board region P3. Further, the second path PT2 may be an electric pattern.

The (2-2)^{th} detection signal output terminal 214B of the second sensor unit 210A may be to the controller 190. A third path PT3 may be formed between the (2-2)^{th} detection signal output terminal 214B of the second sensor unit 210A and the controller 190. The third path PT3 may be an electric pattern. Further, the third path PT3 may be disposed on the second board region P2. Further, the second sensor unit 210B may be connected to any one of the inversion (-) terminal and the non-inversion (+) terminal of the amplifier in the controller 190 through the third path PT3.

In an embodiment, the third path PT3 may have a different electrical length from the first path PT1. For example, the electrical length of the third path PT3 may be smaller than the electrical length of the first path PT1.

In an embodiment, the (1-1)^{th} detection signal output terminal 213A of the first sensor unit 210A may be connected to the non-inversion (+) terminal of the amplifier in the controller 190, and the (2-2)^{th} detection signal output terminal 214B of the second sensor unit 210B may be connected to the inversion (-) terminal of the amplifier in the controller 190.

Accordingly, in relation to the detection signal, both the first path PT1 and the second path PT2 may overlap the first board region P1, the second board region P2, and the third board region P3. In other words, the first path PT1 and the second path PT2 may extend from the first board region P1 to the second board region p2 or from the second board region P2 to the first board region P1 via the third board region P3. Accordingly, the second path PT and the first path PT have similar electrical lengths, the third path PT3 is present only on the second board region P2, and thus the electrical length may be minimized.

Accordingly, the first sensor unit 210A and the second sensor unit 210B may be electrically connected in series, and at the same time, an electrical length for connection to the controller 190 or the amplifier in the controller may be reduced. Accordingly, the first board part according to an embodiment may provide resistance reduction and noise reduction. As well, as described above, a differential signal may be output to provide space saving of the first board part.

Furthermore, the plurality of third Hall sensors may be connected in series and arranged in the third board region P3.

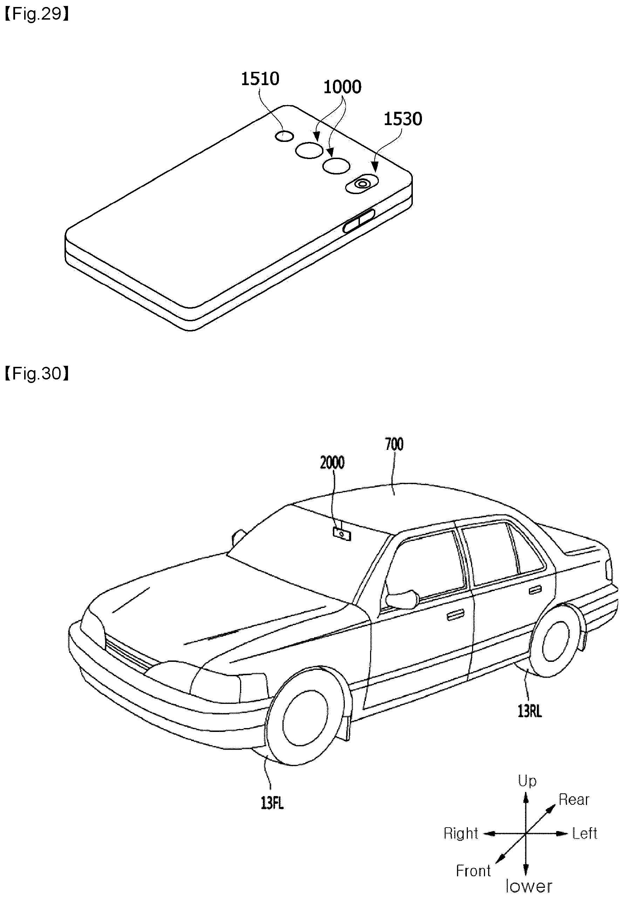

FIG. 29 is a perspective view of a mobile terminal to which the camera module according to the embodiment is applied.

Referring to in FIG. 29, a mobile terminal 1500 of an embodiment may include the camera module 1000, a flash module 1530, and an AF device 1510, which are provided on a rear surface thereof.

The camera module 1000 may include an image capturing function and an AF function. For example, the camera module 1000 may include the AF function using an image.

The camera module 1000 processes an image frame of a still image or a moving image obtained by an image sensor in a capturing mode or a video call mode.

The processed image frame may be displayed on a predetermined display unit and stored in a memory. A camera (not illustrated) may be disposed on a front surface of a body of the mobile terminal.

For example, the camera module 1000 may include a first camera module and a second camera module, and the OIS together with the AF function or the zooming function may be implemented by the first camera module and the second camera module.

The flash module 1530 may include a light emitting element therein that emits light. The flash module 1530 may be operated by a camera operation of the mobile terminal or control of a user.

The AF device 1510 may include one of packages of a surface light emitting laser element as a light emitting unit.

The AF device 1510 may include an AF function using laser. The AF device 1510 may be mainly used in a condition in which the AF function using an image of the camera module 1000 is degraded, for example, in a state close to 10 m or less or a dark environment.

The AF device 1510 may include a light emitting unit including a vertical cavity surface emitting laser (VSSEL) semiconductor element and a light receiving unit, such as a photodiode, which converts light energy into electrical energy.

FIG. 30 is a perspective view of a vehicle to which the camera module according to the embodiment is applied.

For example, FIG. 30 is an external view of a vehicle including a vehicle driving assistance device to which the camera module 1000 according to the embodiment is applied.

Referring to FIG. 30, a vehicle 700 according to an embodiment may be provided with wheels 13FL and 13FR rotated by a power source and a predetermined sensor. The sensor may be a camera sensor 2000, but the present invention is not limited thereto.

The camera 2000 may be a camera sensor to which the camera module 1000 according to the embodiment is applied. The vehicle 700 according to the embodiment may acquire image information through the camera sensor 2000 that captures a front image or a surrounding image, determine whether a lane line is not identified using the image information, and generate a virtual lane line when the lane line is not identified.

For example, the camera sensor 2000 may acquire a front image by photographing a front side of the vehicle 700, and a processor (not illustrated) may obtain image information by analyzing an object included in the front image.

For example, when an object such as a lane line, an adjacent vehicle, a driving obstacle, and an indirect road marker such as a median, a curb, and a street tree, is included in the image captured by the camera sensor 2000, the processor may detect this object and include the detected object in the image information. In this case, the processor may further supplement the image information by acquiring information on a distance from the object detected through the camera sensor 2000.

The image information may be information on the object captured in the image. The camera sensor 2000 may include an image sensor and an image processing module.

The camera sensor 2000 may process the still image or the moving image obtained by the image sensor (for example, a complementary metal-oxide semiconductor (CMOS) or a charge coupled device (CCD)).

The image processing module may process the still image or the moving image acquired through the image sensor, extract necessary information, and transmit the extracted information to the processor.

In this case, the camera sensor 2000 may include a stereo camera to improve the measurement accuracy of the object and further secure information such as a distance between the vehicle 700 and the object, but the present invention is not limited thereto.

Embodiments have been described above, but are merely illustrative, and do not limit the present invention, and those skilled in the art to which the present invention pertains may derive various modifications and applications not illustrated above without departing from the essential feature of the present embodiment. For example, each component specifically illustrated in the embodiments can be modified and implemented. Further, differences related to these modifications and applications should be construed as being included in the scope of the present invention defined in the appended claims.

## Claims

1. A camera actuator comprising:
a housing;
a mover that is disposed in the housing and includes an optical member; and
a driving part that is disposed in the housing and drives the mover,
wherein the driving part includes a driving magnet, a driving coil disposed to face the driving magnet, a sensor unit that detects a location of the mover, and a board part connected to the sensor unit, and
the sensor unit includes a first sensor unit and a second sensor unit that faces and is connected in series to the first sensor unit.

2. The camera actuator of claim 1, wherein the board part includes:
a first board region;
a second board region disposed to be spaced apart from and correspond to the first board region; and
a third board region disposed between the first board region and the second board region,
the first sensor unit is disposed in the first board region, and
the second sensor unit is disposed in the second board region.

3. The camera actuator of claim 2, further comprising a controller configured to output a driving signal for moving the optical member to a target location on the basis of location information of the optical member detected by the first sensor unit and the second sensor unit.

4. The camera actuator of claim 3, wherein the controller is disposed in any one of the first board region and the second board region.

5. The camera actuator of claim 3, wherein the first sensor unit includes a (1-1)^{th} detection signal terminal having a positive (+) polarity and a (2-1)^{th} detection signal output terminal having a negative (-) polarity, and
the second sensor unit includes a (1-2)^{th} detection signal output terminal having a positive (+) polarity and a (2-2)^{th} detection signal output terminal having a negative (-) polarity.

6. The camera actuator of claim 5, wherein the board part includes:
a first path connecting the (1-1)^{th} detection signal output terminal and the controller;
a second path connecting the (2-1)^{th} detection signal output terminal and the (1-2)^{th} detection signal output terminal; and
a third path connecting the (2-2)^{th} detection signal output terminal and the controller.

7. The camera actuator of claim 6, wherein the second path passes through the first board region, the second board region, and the third board region.

8. The camera actuator of claim 6, wherein lengths of the first path and the third path are different from each other.

9. The camera actuator of claim 2, wherein the housing includes:
a first housing side part; and
a second housing side part disposed to correspond to the first housing side part,
the first board region is in contact with the first housing side part, and
the second board region is in contact with the second housing side part.

10. The camera actuator of claim 9, wherein the first housing side part includes a first housing hole,
the second housing side part includes a second housing hole,
the driving magnet includes a first magnet and a second magnet disposed to correspond to the first magnet,
the driving coil includes a first coil and a second coil disposed to correspond to the first coil,
any one of the first coil and the first magnet is disposed in the first housing hole, and
any one of the second coil and the second magnet is disposed in the second housing hole.
